Europäisches Patentamt

European Patent Office

Office européen des brevets

(11) Publication number: **0 072 809**
**B1**

## (12) EUROPEAN PATENT SPECIFICATION

(45) Date of publication of patent specification: **28.05.86**

(21) Application number: **82900378.9**

(22) Date of filing: **12.02.82**

(86) International application number:
**PCT/GB82/00035**

(87) International publication number:
**WO 82/02720 19.08.82 Gazette 82/20**

(51) Int. Cl.⁴: **C 09 K 3/10,** C 08 L 21/00,
C 08 L 9/00, C 08 L 9/06,
C 08 L 11/00

(54) SEALING COMPOSITIONS.

(30) Priority: **14.02.81 GB 8104682**

(43) Date of publication of application:
**02.03.83 Bulletin 83/09**

(45) Publication of the grant of the patent:
**28.05.86 Bulletin 86/22**

(84) Designated Contracting States:
**DE FR GB**

(56) References cited:
**DE-A-1 013 376**
**FR-A-2 024 360**
**FR-A-2 024 361**
**FR-A-2 343 795**
**US-A-2 358 290**

**The file contains technical information
submitted after the application was filed and
not included in this specification**

(73) Proprietor: **W.R. GRACE & CO.**
**Grace Plaza 1114 Avenue of the Americas**
**New York New York 10036 (US)**

(72) Inventor: **SAMUEL, David Nuttall**
**44 West Street Great Gansden**
**Cambridgeshire (GB)**
Inventor: **SINNOTT, Kenneth Martin**
**Columbia Chuch End, Hilton**
**Huntingdon Cambridgeshire (GB)**

(74) Representative: **Lawrence, Peter Robin**
**Broughton et al**
**GILL JENNINGS & EVERY 53-64 Chancery Lane**
**London WC2A 1HN (GB)**

Courier Press, Leamington Spa, England.

# 0 072 809

## Description

This invention relates to sealing compositions intended for sealing container closures such as top or bottom end closures of cans or replaceable or non-replaceable caps for jars or bottles. The compositions can also be used for other sealing purposes but, for clarity, since they are formulated to meet the particular requirements of can and other container closure seals the invention is described solely in terms of compositions for sealing container closures.

Traditional container and sealing compositions have comprised a liquid medium in which has been dispersed or dissolved rubber or other polymeric material and which includes also fillers, tackifying resin and other additives.

The liquid medium may be aqueous, for instance as in US Patent Specification No. 3,409,567 or British Patent Specification No. 1566924, or the liquid medium may be organic, for instance as in British Patent Specification No. 1,340,730. A wide variety of fillers have been proposed for use in the compositions, for instance as is shown by these patent specifications, but only a few have proved to be satisfactory in use.

Typical fillers that have been found satisfactory include kaolin, talc, zinc oxide and calcium carbonate. Generally the amount of filler must not be too high or else the sealing properties are impaired.

The liquid composition is applied to one at least of the mating surfaces of the closure and the sealing face of the container, generally to the closure, and is then dried on the surface. The closure is pressed onto the sealing face of the container so as to grip the container firmly and the composition provides a seal between the container and the closure.

It is necessary that the composition should have appropriate rheological and other physical properties. For instance when applied to can ends it should flow adequately during sealing so as to distribute itself over the mating surfaces, but preferably it does not flow to such an extent that significant extrusion of the composition occurs along the walls of the can. The seal provided by the composition should prevent ingress of bacteria. Generally it should also prevent loss of liquid, vacuum or gas.

It has been our object to provide sealing compositions that satisfactorily seal container closures and that include filler that has not previously been proposed for this purpose. Preferably the filler is such that, compared to use of fillers commonly used at present, either the seal is improved or the amounts of either the rubber or other polymeric material or the tackifying resin, or both, can be reduced without reducing the sealing properties. It has also been our object to provide methods of sealing containers using such compositions, and to provide sealed containers.

A sealed container according to the invention has a closure sealed to it by a seal that includes a gasket formed of a composition that comprises a rubbery polymer and that has filler dispersed throughout characterised in that the filler includes graphite.

A container closure according to the invention has its sealing face lined with a gasket formed from a composition that comprises a rubbery polymer and filler that is dispersed throughout the composition and that includes graphite, and generally also tackifying resin. The composition may have been a meltable solid but preferably comprised also a liquid medium in which the polymer was dissolved or dispersed.

The sealed container may be fully sealed, for instance being a jar or a two piece can or a can sealed at both ends, or it may be a can that has a closure sealed to it one end but which is open at the other.

Such a sealed container can be formed from a container and a container closure in conventional manner. Thus the sealing face of the closure is lined with a liquid composition comprising rubbery polymer and a dispersion of the filler, the composition is solidified (generally by drying) to form a gasket, and the sealing face of the closure is compressed around the end of the container thereby sealing the closure to the sealing face with the gasket within the seal.

When the container is a bottle this gasket is trapped between the sealing face of the rim of the bottle and the overlying closure. Preferably however the container is a can in which event the gasket is trapped in the double seam formed in conventional manner by compressing the outer periphery of the container closure around an outwardly extending flange of the side wall and then pressing the flange and the closure periphery against the side wall of the container generally in a single operation.

The graphite will normally have a particle size below 200 microns ($\mu$m), typically from 1 to 100 microns ($\mu$m), and preferably between 1 and 60 microns ($\mu$m). The average particle size is generally from 5 to 50 microns ($\mu$m), preferably around 15 microns ($\mu$m).

The graphite may be natural graphite or synthetic graphite. It may have been given a surface coating of a variety of materials provided the surface coating does not interact with other components in the composition in such a way as to reduce significantly the sealing properties of the composition.

Throughout this specification amounts of components of the composition, including amounts of graphite and other fillers, are expressed as amounts by volume based on the volume of rubbery polymer, unless otherwise specified. For instance 10% graphite means 10 volumes graphite per 100 volumes rubbery polymer.

The amount of graphite in the composition should be at least 1%, since lower amounts tend to give inadequate improvement. Generally the amount is below 150%, and normally below 100%, since greater amounts tend not to give significant further improvement. Generally the amount is at least 3%, and normally, at least 5%. Preferably the amount is at least 10%. Generally the amount is up to 50%. Typically the amount may be from 5 to 100%, most preferably 10 to 50%.

2

The filler may consist substantially only of graphite, with the result that the composition may contain no significant amounts of other fillers, although it may include fillers that are present primarily for their pigmentary purposes, for instance titanium dioxide which may be present in amounts of up to 10 or 15%.

Good results are also obtained when the filler does include other particulate inorganic material and this is generally preferred. The material other than graphite may be present in an amount of 0 to 150% (based on the volume of rubbery polymer), generally 10 to 100% and preferably 15 to 100%. Preferably the composition includes 0.05 to 2 parts, most preferably 0.1 to 1 part, by volume graphite per part by volume other inorganic particulate filler.

Although the total volume of filler, including graphite, can be similar to that conventionally used in commercial sealing compositions, for instance 10 to 45%, a particular advantage of the invention is that larger amounts of total filler may be used while still obtaining satisfactory sealing properties. For instance the total amount of filler, including graphite, is usually at least 20% (by volume based on the volume of rubbery polymer) and can be up to 175%, for instance 50 to 125%.

Titanium dioxide or other pigmentary filler (for instance carbon black) generally has a particle size below 5 microns ($\mu m$) but other particulate inorganic fillers that may be used in the invention generally have a particle size of from 1 to 50 microns ($\mu m$). The filler should be substantially non-abrasive, so that it does not cause wear to the machinery by which the composition is mixed and lined onto the can or other end.

The preferred other filler is kaolin or china clay or zinc oxide but other fillers include colloidal silica and other silicic fillers, synthetic silicate, calcium carbonate or sulphate, aluminium hydroxide, talc, dolomite, barium sulphate, or magnesium oxide or carbonate or silicate. Such fillers may have been surface treated, for instance in conventional manner.

Instead of modifying the colour of the composition by including particulate pigment some other colouring material, for instance a soluble dye, may be included.

The composition is formed from a rubbery polymer, that is to say a polymer that, when dried, forms a gasket that is sufficiently flexible and should have the conventional properties of rubbery polymers, i.e. it should be capable of being subjected to substantial reversible deformation and preferably is a material conventionally regarded as useful in container sealing compounds. Rubbery polymers suitable for forming seals are well known. Generally the Mooney Viscosity ($ML_{1+4}^{100°C}$) of the rubbery polymer is from 20 to 200, preferably 40 to 160.

The rubbery polymer may be a natural polymer, for instance natural rubber, or may be a synthetic polymer. Suitable synthetic rubbery polymers include butyl rubber, polychloroprene, butadiene acrylonitrile copolymers, ethylene propylene copolymers, ethylene-propylene-diene terpolymers, styrene isoprene block copolymers, poly-butadiene, styrene acrylic copolymers, polyvinylidene chloride, polyvinylidene chloride copolymers, plasticised polyvinyl chloride, polyvinyl chloride copolymers, plasticised polyvinyl propionate or acetate, polyvinyl propionate or acetate copolymers, polyacrylic acid copolymers, polymethylacrylic acid copolymers acrylic ester copolymers, methacrylic ester copolymers, plasticised polystyrene, vinyl acetate copolymers with for instance ethylene, styrene butadiene block copolymers, styrene butadiene rubbers solution polymerised or emulsion polymerised, and carboxylated styrene butadiene copolymers. Blends may be used. Compositions based on vulcanisable polymers may include vulcanising agent.

Naturally the rubbery polymer will be chosen having regard to, for instance, the type of composition that is being used for forming the seal. The preferred polymers are styrene butadiene rubbers having a styrene content of 15 to 60% preferably 18 to 45% by weight. They may have been made by any convenient polymerisation method, and thus may have been made by hot or cold polymerisation techniques.

Tackifier resins are generally included in can sealing compositions and they may be included in the compositions used in the invention. However because of the good sealing properties obtained by the use of novel filler satisfactory results can often be obtained without a tackifier resin in the invention. Instead of using a tackifier resin a liquid plasticiser, such as white oil or other hydrocarbon oil, that softens the polymer may be used in amounts of for instance 1 to 60%, preferably 5 to 40%.

Best results are generally obtained when tackifier resin is included. Suitable materials are well known and are generally selected from synthetic hydrocarbon or petroleum resins, polyterpene resins, phenolic resin modified with natural resins such as rosin or terpene, xylene formaldehyde resin and modified products thereof, and esterified rosins or other rosin type resins such as rosin, hydrogenated rosin, or hardened rosin. The amount of tackifier is generally at least 10% (by volume of rubbery polymer) but less than 250% and preferably less than 200%. Generally the amount is at least 15%.

The compositions may include minor amounts, e.g. up to 1% or at most up to 5% of other additives that are known to those skilled in the art and that are conventional in filled sealing compositions, such as viscosity increasing agents (for instance ammonium alginate, bentonite or gum karaya or high molecular weight polyacrylic acid), bactericides, corrosion inhibitors, surfactants, anti-oxidants (for instance phenolic or amino anti-oxidants) and pH adjusters (for instance ammonia, primary amine, sodium hydroxide or sodium carbonate).

The composition preferably is liquid at room temperature and thus preferably includes a liquid medium that serves as a carrier for the rubbery polymer and the filler.

The amount of the liquid medium will be chosen having regard to the maximum total solids concentration obtainable in the final composition consistent with solubility or dispersibility of the polymer in the liquid medium, ease in preparing the composition, storage stability of the composition, and application of the composition to the can end using high speed automatic lining equipment. In general, the amount of liquid medium is such as to yield a composition having a solids content of from 20% to 85% by weight.

Preferably the liquid medium is aqueous. The aqueous composition will generally contain at least one stabiliser for stabilising the dispersion. This stabiliser may be selected from any of the materials conventionally used for stabilising aqueous sealing compositions based on filler and rubbery polymer. Such stabilisers include styrene maleic anhydride or other styrene copolymers, methyl cellulose, polyacrylamide, ethoxylated condensates, polyvinyl pyrrolidone, ammonium oleate, and casein. Such stabilisers may be used in admixture, for instance with other materials.

The aqueous composition is preferably a latex obtained by dispersing the specified filler and tackifier (if present) into a latex of the chosen rubbery polymer, for instance as formed by emulsion polymerisation. The composition may be made simply by mixing into the chosen latex (optionally after dilution) the tackifying resin, the selected filler or fillers, and any other additives, all in conventional manner. Naturally care must be taken to ensure that the latex does not coagulate and that a uniform dispersion is obtained. For instance it may be desirable to form a dispersion of the filler or fillers, and optionally also tackifier, and add this stable dispersion to the latex. The total solids content of the composition is generally from 20 to 85% by weight, preferably 30 to 80%.

Instead of formulating the aqueous composition as a latex it may be a dispersion obtained by dispersing solid rubbery polymer and filler into the aqueous medium. The aqueous dispersion may be made by milling the solid rubber with filler and other optional additives, including also generally any tackifying resin, using an internal mixer, for instance a Banbury mixer, so as to form a rubber stock. This rubber stock is then dispersed in water in conventional manner, for instance using a Z-blade type of mixer. Additional components, for instance thickening agent and more water, may be added to the dispersion to alter its consistency. Instead of including all the major additives in the rubber stock some may be added to the dispersion. For instance the rubber may be milled with some of the additives and then dispersed in water and other major additives introduced at this stage. For instance the novel filler of the invention may be added to the aqueous dispersion obtained by dispersing solid rubber and optionally some of the filler.

Although aqueous compositions are preferred the compositions of the invention can be organic, in which the liquid medium comprises organic solvent in which some or all of the rubbery polymer will dissolve, any remaining polymer going into dispersion.

Suitable organic liquids which may be employed in preparing organic compositions include aliphatic and aromatic hydrocarbons, for example 3-methylheptane, hexane, heptane, xylene and toluene; chlorinated hydrocarbons, such as dichloropentane; ketones; ethers, ether-alcohols, and mixtures of these and other volatile organic liquids which together form media as known in the art for the selected elastomers.

The organic compositions are generally made by blending the solid rubber with filler and optional additives such as anti-oxidants in an internal mixer, for instance a Banbury mixer. The solid rubber stock thus obtained is comminuted and dissolved in the chosen solvent or solvent mixture in conventional manner. If tackifying resin is to be introduced it may be added to the solvent or it may be blended into the solid rubber stock.

The composition may be an organosol of the rubbery polymer, filler, plasticiser, organic solvent and other optional additives.

The composition may be a melt consisting of the rubbery polymer and filler, and other optional additives. For instance the novel filler of the invention, and optionally other filler, may be mixed into the polymer while it is soft and the mass then fully melted before application to the closure.

We find that graphite is a very satisfactory filler for inclusion in container sealing compositions both because it gives satisfactory sealing properties and because it avoids some of the handling and other difficulties that may be encountered with other fillers. For instance fillers such as calcium carbonate can lead to a risk of coagulation of a polymer latex into which such a filler is incorporated. Accordingly when such fillers are used it is necessary to take particular precautions to prevent coagulation of any latex or dispersion that is present.

Graphite not only imparts satisfactory sealing properties to the compositions but has the advantage that it does, as a generality, result in improved sealing properties compared to the same composition in which an equivalent volume of other filler, such as kaolin is used in place of graphite. Also graphite gives satisfactory sealing performance when the composition contains widely varying proportions of ingredients and widely differing ingredients.

It is of course well known to include carbon black in can sealing compositions for its pigmentary properties but this always has very fine particle size and does not give the beneficial results obtainable from the inclusion of graphite.

A number of sealing tests are used in the industry and are recognised as being meaningful and by saying that the sealing properties are improved we mean that the number of cans that fail a meaningful sealing test will be reduced. Because there is no absolute test of sealing properties various tests are used and a judgement is made on the basis of the results of all these tests. For instance if one test shows an improvement in properties and another shows a variation or possibly a deterioration in sealing properties the composition may well be assessed as giving improved sealing properties because of the improvement shown in the first test.

It is recognised in the industry that extrusion of composition around the rim of a can, so as to give visible beads of composition on the outside of the can after sealing, is undesirable. Indeed for some purposes cans containing a noticeable amount of extruded composition around the rim may be rejected, irrespective of the properties recorded in any other sealing tests. The inclusion of graphite tends to reduce the tendency for such extrusion to occur, especially during hot sterilisation that may follow sealing. The extent of extrusion is recorded in the examples below by the "sterilisation extrusion" test that is described below. In this test improved extrusion properties is manifested by less extrusion occurring and thus by a lower quantitative value being recorded.

The most consistently satisfactory sealing properties and the greatest tendency for a significant improvement in sealing properties, especially in the extrusion properties, is obtainable in the invention when the graphite is included in aqueous compositions, and especially in latex compositions, and so these are preferred. Useful results are, however, obtained in the other types of compositions described above, especially in the described organic compositions, with improvements in the extrusion properties again being observed with many such compositions. It is generally preferred that the rubbery polymer should have been made by emulsion polymerisation since polymers made by solution polymerisation appear to give sealing properties that are not as good as those made by emulsion polymerisation, especially in organic compositions.

Some non-limiting examples of the invention are now given.

In these sealing properties are identified by two sets of quantitative values which are referred to as "biological seal" and "sterilisation extrusion". These are recorded as follows:

"Biological Seal". The composition is lined into can closures (often termed can ends) and dried in conventional manner, the amount of the compositions being such as to give the dry film volume generally recommended for the particular size. Cans having a soldered side seam are then filled with a hot liquid nutrient, typically at a temperature of 97°C, leaving a small headspace. The test closures are double seamed onto these filled cans whilst simultaneously injecting steam into the headspace. The closed cans are then sterilised, typically at 121°C for 30 minutes, and after sterilisation are immediately cooled in water containing gas-producing, non-pathogenic micro-organisms capable of growth in the aforementioned nutrient. After cooling and whilst still wet with the cooling water, the cans are subjected to a controlled deformation at the junction of the side seam and the double seam of the test closure. After incubation for six days at an elevated temperature optimum for the growth of the micro-organisms, followed by one day at ambient temperature, the cans are examined visually and the number of swollen cans recorded. The retained vacuum in the remaining cans is measured. Cans having a low retained vacuum and the swollen cans are considered to have reached this condition through failure of the seal in the test closure. The swollen and low vacuum cans are termed failures and the "biological seal" value is the failure rate expressed as the number of such cans per thousand tested. Because of the procedures used the number of failed cans per thousand in this biological seal test is of course very much greater than that which would occur with commercially packed cans sealed with these compositions.

"Sterilisation extrusion". The composition is lined into can closures and dried, in conventional manner, the amount of the composition being such as to give a dry film volume approximately 20% greater than that generally recommended with the particular closure size. Cans are filled with water at typically 70°C to leave no headspace and test closures are double seamed onto these filled cans. The closed cans are then sterilised typically at 130°C for one hour and allowed to cool to room temperature before examination. The number of protrusions of compound from the double seam along the outside wall of the can body at the test closure is counted, typically on a sample of 10 cans for each composition. Large protrusions are counted as appropriate multiples of the typical, more commonly occurring, small protrusions. The average number of protrusions per can is recorded as the value for extrusion". This value should be as low as possible, preferably below 10 under the conditions of the test. However, because of the extreme conditions of the test, greater values than this are commercially tolerable.

Since the extrusion and biological seal results will vary according to, for instance, variable conditions under which the tests are carried out comparisons should, in general, be made only between results within a single example. It is desirable that the "biological seal" and "sterilisation extrusion" values should be as low as possible.

In each of the following examples the chosen rubbery polymer is supplied with minor amounts of conventional additives known to those skilled in the art and is combined with the specified amounts of filler, titanium dioxide pigment, tackifier resin if present, and stabiliser if the composition is aqueous. In each of the examples the amount of water or organic solvent is selected so that the composition has a solids content, and therefore a viscosity, suitable for the apparatus being used for depositing the composition on the can closure. Generally the solids content is from 40 to 75% by weight. Thus those compositions in which the filler consists of kaolin have a total solids content of about 60% by weight and comparative compositions in which some or all of the filler is replaced by graphite will have the solids content that follows automatically from this substitution.

In each example the composition is lined onto the can closure, dried and then tested in the described manner.

In each example the filler consists of the graphite, if present, and the stated inorganic particulate material, if present which generally has a particle size of 1 to 50 microns (μm) although titanium dioxide may have a particle size down to 0.1 micron (μm).

In each example, unless otherwise stated, the graphite is natural graphite having a particle size range of 1 to 60 microns (μm) with a median (by weight) particle size of 15 microns (μm). It has a carbon content of 90% with the main impurities being silica and silicates and has a density of 2.25 g/ml.

Each of examples 1 to 7 are of latex based compositions and are formed by mixing filler, tackifying resin (when present), titanium dioxide and a latex of the chosen rubbery polymer.

In each of examples 1, 2, 3, 4A to 4D, and 5 the rubbery polymer is a styrene butadiene latex having a solids content of 66 to 69% by weight and containing 31 to 36% bound styrene and which has been polymerised cold (at 5°C) using fatty acid soaps. The polymer in the latex has a Mooney value (as defined above) of 100 to 130. However, similar results may be obtained using other styrene butadiene latices that may have been polymerised hot or cold such as those listed in the following table:

| Type | Total solids % | Bound styrene % | Mooney value | Emulsifier |
|------|------|------|------|------|
| Cold | 63 | 29 | 140 | Fatty acid |
| Cold | 67 | 34 | 75 | Fatty acid |
| Cold | 68 | 30 | 150 | Fatty acid |
| Hot | 45 | 46 | 90 | Rosin ester |
| Hot | 42 | 50 | 30 | Rosin ester |
| Hot | 59 | 46 | 75 | Rosin ester |
| Hot | 50 | 46 | 70 | Rosin ester |

In examples 4E and 4F the rubbery polymer is a hot polymerised styrene butadiene copolymer latex. In each of examlpes 1 to 6 the composition includes, unless otherwise specified, 22% of a main tackifier, 4.1% of a stabiliser and 3.2% titanium dioxide, all based on the volume of rubbery polymer in the latex. In each of examples 1, 2 and 4 to 6 the main tackifier is a hydrocarbon resin tackifier which is a polymer of mixed 5 carbon alkenes having a melting point of about 100°C. In each of examples 1 to 3, 5 and 6 the stabiliser is a styrene maleic anhydride copolymer stabiliser. In example 6 the styrene butadiene rubber of example 1 is replaced by an equal amount of a styrene acrylic, polyvinylidene chloride or polyvinyl acetate latex. The styrene acrylic latex is a styrene acrylic ester copolymer having a minimum film forming temperature of 20°C and a film hardness (Persoz) of 160 seconds. The polyvinylidene chloride copolymer latex has a minimum film forming temperature of 4°C. The polyvinyl acetate latex is of a homopolymer.

The composition of example 7 contains 100 parts by volume vulcanisable neoprene latex and thus the gasket formed from this composition is of vulcanised neoprene. The composition also contains 7.6% casein as stabiliser, 19.3% polyvinyl acetate homopolymer, 10.2% titanium dioxide and 35.5% kaolin or graphite.

The composition of example 8 is made by milling the rubbery copolymer with the chosen fillers and tackifying resin using a Banbury mixer to form a rubber stock which is then dispersed in water using a Z blade mixer. The rubbery copolymer is a blend of equal amounts of 2 styrene butadiene rubbers. One is a rubber cross-linked with divinylbenzene and containing 44% bound styrene and that was polymerised at 5°C using mixed fatty acid/rosin acid soaps as emulsifiers. The other is a rubber containing 23% bound styrene, polymerised under similar conditions, and having a Mooney value ML 1+4 of 48 to 58. The composition contains 3% titanium dioxide, 1.2% zinc oxide, 10% casein as stabiliser, 44% of a tackifier which is a glycerol ester of wood rosin having a melting point of about 85°C and an acid number of from 5 to 10, together with 14.8% of kaolin or other filler.

The compositions in examples 9, 10 and 11 were formed by blending rubbery polymer, tackifier and filler on a Banbury mixer, comminuting the resultant rubber stock and mixing it into an organic solvent which was commercial grade hexane in each of the examples except for examples 11E and 11F, in which the solvent is toluene. The tackifier in Example 10 is a glycerol ester of hydrogenated rosin having a melting point of about 80°C. The amount of polyterpene resin in example 9 is 49% and in example 11 is 45% while the amount of wood rosin derival in example 10 is 35.7%. Examples 9 and 11 contain 2% $TiO_2$ while example 10 contains 3% $TiO_2$. The filler content in each composition is as described below.

The rubbery polymer in example 9 is a blend of 67.6% butyl rubber and 32.4% styrene butadiene rubber. The butyl rubber is an isobutylene-isoprene copolymer. The styrene butadiene rubber contains divinylbenzene and cross-linking agent, and 44% bound styrene and was polymerised at 5°C using mixed fatty acid/rosin acid soaps. The rubbery polymer used in Example 10 is a nitrile rubber. The rubbery polymer used in Example 11A is a blend of 67.1% styrene butadiene rubber containing 23% bound styrene and that was emulsion polymerised at 50°C using rosin acid soaps as stabilisers and having a Mooney value ML 1+4 of 50 to 58, together with 32.9% of the same styrene butadiene rubber as Example 9. In Examples 11C and 11D this blend is replaced by an equal weight of a random styrene butadiene copolymer having a 25% styrene content and a Mooney value of 55 and which was made by solution polymerisation. All the other styrene butadiene polymers discussed above were made by emulsion polymerisation.

In Examples 11E and 11F the blend used in Example 11A was replaced by an equal weight of a thermoplastic styrene-butadiene-styrene block copolymer. In Examples 11G and 11H the blend in Example 1 was replaced by an equal weight of an ethylene propylene rubber that is an amorphous copolymer having a Mooney value of 35 to 45.

The following tables set out the filler used and the quantity of filler, or other variables, in the compositions together with the biological seal and sterilisation extrusion values. Since the results will vary according to, for instance, variable conditions under which the tests are carried out comparisons should in general be made only between results within a single example. It is desirable that the biological seal and sterilisation extrusion values should be as low as possible.

Example 1

| Test | Filler | Biological seal | Sterilisation extrusion |
|------|--------|-----------------|-------------------------|
| 1A | 30 Kaolin 0 Graphite | 300 | 26.4 |
| 1B | 30 Graphite 0 Kaolin (average 15 microns) | 160 | 0.0 |
| 1C | 3 Graphite 27 Kaolin | 240 | 9.8 |
| 1D | 6 Graphite 24 Kaolin | 165 | 5.2 |
| 1E | 15 Graphite 15 Kaolin | 180 | 0.8 |

Similar results were obtained using various natural and synthetic graphites having particle size ranges of 1—75 μ and 1—53 μ and carbon contents of 67 to 99.5%.

Example 2

| Test | Filler | Biological seal | Sterilisation extrusion |
|------|--------|-----------------|-------------------------|
| 2A | 30 CaCO$_3$ 0 Graphite | 510 | 0.0 |
| 2B | 15 CaCO$_3$ 15 Graphite | 505 | 0.0 |
| 2C | 30 Talc 0 Graphite | 600 | 7.0 |
| 2D | 15 Talc 15 Graphite | 635 | 0.0 |

Example 3

| Test | Kaolin | Graphite | Tackifier | Biological seal | Sterilisation extrusion |
|------|--------|----------|-----------|-----------------|-------------------------|
| 3A | 30 | 0 | } 21.5 Hydro-carbon resin | 610 | 2.4 |
| 3B | 0 | 30 | | 435 | 0.0 |
| 3C | 30 | 0 | } 20.5 poly-terpene resin | 445 | 5.2 |
| 3D | 0 | 30 | | 350 | 0.0 |
| 3E | 30 | 0 | } 21 hydrogenated methyl ester of wood rosin | 590 | 16.1 |
| 3F | 0 | 30 | | 650 | 2.4 |
| 3G | 30 | 0 | none | 935 | 3.9 |
| 3H | 0 | 30 | none | 905 | 0.3 |

Example 4

| Test | Kaolin | Graphite | Stabiliser | Biological seal | Sterilisation extrusion |
|------|--------|----------|------------|-----------------|-------------------------|
| 4A | 30 | 0 | } 4 Styrene Maleic co-polymer | 610 | 2.4 |
| 4B | 0 | 30 | | 435 | 0.0 |
| 4C | 30 | 0 | } 4 Ammonium oleate | 970 | 63.2 |
| 4D | 0 | 30 | | 995 | 3.7 |
| 4E | 30 | 0 | } 1 casein | 415 | 18.3 |
| 4F | 0 | 30 | | 270 | 3.8 |

Example 5

| Test | Hydrocarbon resin tackifier | Kaolin | Graphite | Biological seal | Sterilisation extrusion |
|------|-----------------------------|--------|----------|-----------------|-------------------------|
| 5A | 22 | 30 | 0 | 580 | 15.7 |
| 5B | 22 | 0 | 105 | 845 | 0.1 |
| 5C | 149 | 68 | 30.5 | 910 | 0.0 |
| 5D | 98 | 45 | 30.5 | 695 | 6.6 |
| 5E | 147 | 68 | 30.5 | 825 | 10.9 |
| 5F | 147 | 90.5 | 30.5 | 870 | 33.3 |
| 5G | 196 | 68 | 30.5 | 920 | 8.8 |
| 5H | 196 | 90.5 | 30.5 | 895 | 25.6 |
| 5I | 196 | 0 | 30.5 | 845 | 0.0 |

8

# 0 072 809

### Example 6

| Test | Kaolin | Graphite | Rubbery polymer | | Biological seal | Sterilisation extrusion |
|---|---|---|---|---|---|---|
| 6A | 33 | 0 | } | styrene acrylic | 785 | 0.3 |
| 6B | 0 | 33 | | | 710 | 0.0 |
| 6C | 36 | 0 | } | polyvinylidene chloride | 825 | 1.9 |
| 6D | 0 | 36 | | | 805 | 0.0 |
| 6E | 36 | 0 | } | polyvinyl acetate | 850 | 21.0 |
| 6F | 0 | 36 | | | 890 | 2.2 |

### Example 7

| Test | Kaolin | Graphite | Biological seal | Sterilisation extrusion |
|---|---|---|---|---|
| 7A | 35.5 | 0 | 865 | 3.7 |
| 7B | 0 | 35.5 | 810 | 1.6 |

### Example 8

| Test | Kaolin | Graphite | Biological seal | Sterilisation extrusion |
|---|---|---|---|---|
| 8A | 14.8 | 0 | 100 | 9.0 |
| 8B | 13.3 | 1.5 | 125 | 29.2 |
| 8C | 11.8 | 3.0 | 115 | 22.9 |
| 8D | 7.4 | 7.4 | 120 | 2.8 |
| 8E | 0 | 14.8 | 105 | 6.9 |

Note: The Sterilisation Extrusion result appears anomolous in 8A.

### Example 9

| Test | Filler | Biological seal | Sterilisation extrusion |
|---|---|---|---|
| 9A | 21.9 Kaolin; 7.1 Synthetic silicate 0 graphite | 90 | 0.2 |
| 9B | 29 Graphite | 290 | 0.0 |

### Example 10

| Test | Filler | Biological seal | Sterilisation extrusion |
|---|---|---|---|
| 10A | 25.6 Kaolin; 18.1 $CaCO_3$; 0 Graphite | 715 | 9.7 |
| 10B | 43.7 Graphite | 810 | 0.0 |

9

# 0 072 809

Example 11

| Test | Kaolin | Graphite | Rubbery polymer | Biological seal | Sterilisation extrusion |
|------|--------|----------|-----------------|-----------------|-------------------------|
| 11A | 16.4 | 0 | } SBR blend | 475 | 30.7 |
| 11B | 0 | 16.4 | | 445 | 8.3 |
| 11C | 16.7 | 0 | } Solution polymerised SBR | 740 | 3.3 |
| 11D | 0 | 16.7 | | 800 | 14.3 |
| 11E | 16.5 | 0 | } Thermoplastic block SBS copolymer | 275 | 0.0 |
| 11F | 0 | 16.5 | | 180 | 0.4 |
| 11G | 18 | 0 | } Ethylene-proplyene copolymer | 605 | 38.2 |
| 11H | 0 | 18 | | 675 | 15.2 |

## Claims

1. A container closure having its sealing face lined with a gasket formed of a composition that comprises a rubbery polymer and that has a filler dispersed throughout, characterised in that the filler includes graphite.

2. A closure according to claim 1 in which the graphite has an average particle size of 5 to 50 microns (μm).

3. A closure according to claim 1 or claim 2 in which the amount of graphite is from 3 to 100% by volume based on the volume of rubbery polymer.

4. A closure according to claim 3 in which the amount of graphite is from 10 to 50% by volume based on the volume of rubbery polymer.

5. A closure according to any preceding claim in which the filler consists substantially only of graphite.

6. A closure according to any of claims 1 to 4 in which the filler comprises from 0.05 to 2 parts by volume graphite per part by volume other inorganic particulate filler.

7. A closure according to any preceding claim in which the total amount of filler is from 20 to 175% by volume based on the volume of rubbery polymer.

8. A closure according to any preceding claim in which the rubbery polymer is selected from styrene butadiene copolymers, polychloroprene, polyvinylidene chloride, styrene acrylic polymers, polyvinyl acetate and ethylene propylene copolymers.

9. A closure according to any preceding claim in which the rubbery polymer is an emulsion polymerised polymer.

10. A closure according to any preceding claim in which the rubbery polymer is a styrene butadiene copolymer.

11. A closure according to any preceding claim in which the composition additionally includes a tackifier resin.

12. A closure according to claim 11 in which the amount of tackifier resin is from 10 to 250% by volume based on the volume of rubbery polymer.

13. A closure according to claim 1 in which the composition comprises 100 parts by volume emulsion polymerised styrene butadiene rubber, 10 to 50 parts by volume graphite and 10 to 120 parts by volume other inorganic particulate filler.

14. A closure according to any preceding claim in which the gasket was formed from a liquid composition that included a liquid medium in which the rubbery polymer was dissolved or dispersed.

15. A closure according to claim 14 in which the composition comprised a latex of the rubbery polymer and the filler had been dispersed in the latex.

16. A closure according to claim 14 in which the composition comprised an aqueous medium in which solid rubbery polymer and the filler had been dispersed.

17. A closure according to claim 14 in which the composition comprised an organic liquid in which at least part of the rubbery polymer was dissolved.

18. A method of sealing a container closure to a container comprising lining the sealing face of the closure with a composition containing a rubbery polymer and that has filler dispersed throughout, solidifying the composition to form a gasket and then compressing the sealing face of the closure around the end of the container and thereby sealing the closure to the container with the gasket within the seal, characterised in that the filler includes graphite.

10

## 0 072 809

19. A method according to claim 18 in which the container is a can and the closure is a top or bottom can end.

20. A container having a closure sealed to it by a seal that includes a gasket formed of a composition that comprises a rubbery polymer and that has a filler dispersed throughout, characterised in that the filler includes graphite.

**Patentansprüche**

1. Behälterverschluß, dessen Abdichtungsfläche mit einer Dichtung ausgekleidet ist, die aus einer Zusammensetzung gebildet wird, welche ein kautschukartiges Polymer und ein darin dispergiertes Füllmittel aufweist, dadurch gekennzeichnet, daß das Füllmittel Graphit umfaßt.

2. Verschluß nach Anspruch 1, in welchen der Graphit eine durchschnittliche Teilchengröße von 5 bis 50 μm hat.

3. Verschluß nach Anspruch 1 oder 2, in welchem die Graphitmenge 3 bis 100 Vol.-%, bezogen auf das Volumen des kautschukartigen Polymeren, beträgt.

4. Verschluß nach Anspruch 3, in welchem die Graphitmenge 10 bis 50 Vol.-%, bezogen auf das Volumen des kautschukartigen Polymeren, beträgt.

5. Verschluß nach einem der vorhergehenden Ansprüche, in welchem das Füllmittel im wesentlichen nur aus Graphit besteht.

6. Verschluß nach einem der Ansprüche 1 bis 4, in welchem das Füllmittel 0,05 bis 2 Vol.-Teile Graphit pro Vol.-Teil eines anderen organischen feinteiligen Füllmittels umfaßt.

7. Verschluß nach einem der vorhergehenden Ansprüche, in welchem die Gesamtmenge des Füllmittels 20 bis 175 Vol-%, bezogen auf das Volumen des kautschukartigen Polymeren beträgt.

8. Verschluß nach einem der vorhergehenden Ansprüche, in welchem das kautschukartige Polymer ausgewählt ist aus Styrol-Butadien-Copolymerisaten, Polychloropren, Polyvinylidenchlorid, Stryol-Acryl-Polymerisaten, Polyvinylacetat und Ethylen-Propylen-Copolymerisaten.

9. Verschluß nach einem der vorhergehenden Ansprüche, in welchem das kautschukartige Polymer ein emulsionspolymerisiertes Polymer ist.

10. Verschluß nach einem der vorhergehenden Ansprüche, in welchem das kautschukartige Polymer ein Styrol-Butadien-Copolymerisat ist.

11. Verschluß nach einem der vorhergehenden Ansprüche, in welchem die Zusammensetzung zusätzlich ein klebrig machendes Harz enthält.

12. Verschluß nach Anspruch 11, in welchem die Menge des klebrig machenden Harzes 10 bis 250 Vol-%, bezogen auf das Volumen des kautschlukartigen Polymeren, beträgt.

13. Verschluß nach Anspruch 1, in welchem die Zusammensetzung 100 Vol.-Teile emulsionspolymerisierten Styrol-Butadien-Kautschuk, 10 bis 50 Vol.-Teile Graphit und 10 bis 120 Vol.-Teile eines anderen anorganischen feinteiligen Füllmittels enthält.

14. Verschluß nach einem der vorhergehenden Ansprüche, in welchem die Dichtung aus einer flüssigen Zusammensetzung gebildet wird, die ein flüssiges Medium umfaßt, in welchem das kautschukartige Polymerisat gelöst oder dispergiert ist.

15. Verschluß nach Anspruch 14, in welchem die Zusammensetzung einen Latex des kautschukartigen Polymeren umfaßt und das Füllmittel im Latex dispergiert ist.

16. Verschluß nach Anspruch 14, in welchem die Zusammensetzung ein wässriges Medium umfaßt, in welchem das feste kautschukartige Polymerisat und das Füllmittel dispergiert worden sind.

17. Verschluß nach Anspruch 14, in welchem die Zusammensetzung eine organische Flüssigkeit umfaßt, in welcher mindestens ein Teil des kautschukartigen Polymerisates gelöst ist.

18. Verfahren zum Verbinden eines Behälterverschlusses mit einem Behälter, wobei die Abdichtungsfläche des Verschlusses mit einer Zusammensetzung ausgekleidet wird, die ein kautschukartiges Polymer und ein darin durchweg dispergiertes Füllmittel enthält, die Zusammensetzung zur Bildung einer Dichtung verfestigt und dann die Abdichtungsfläche des Verschlusses um das Behälterende herum komprimiert wird, wodurch der Verschluß mit der Dichtung innerhalb der Abdichtung mit dem Behälter verbunden wird, dadurch gekennzeichnet, daß das Füllmittel Graphit umfaßt.

19. Verfahren nach Anspruch 18, in welchem der Behälter eine Dose ist und sich der Verschluß am oberen oder unteren Ende der Dose befindet.

20. Behälter mit einem Verschluß, der mit diesem mittels einer Abdichtung verbunden ist, die eine Dichtung umfaßt, gebildet aus einer Zusammensetzung, die ein kautschukartiges Polymerisat umfaßt mit einem darin durchweg dispergierten Füllmittel, dadurch gekennzeichnet, daß das Füllmittel Graphit einschließt.

**Revendications**

1. Une fermeture pour récipient dont la face d'étanchéité est doublée d'un joint constitué d'une composition comprenant un polymère ou type caoutchouc et contenant une matière de charge en dispersion uniforme, caractérisée en ce que la matière de charge comprend du graphite.

2. Une fermeture selon la revendication 1, dans laquelle le graphite a une dimension de particule moyenne de 5 à 50 μm.

3. Une fermeture selon la revendication 1 ou 2, dans laquelle la quantité de graphite est de 3 à 100% en volume par rapport au volume du polymère du type caoutchouc.

4. Une fermeture selon la revendication 3, dans laquelle la quantité de graphite est de 10 à 50% en volume par rapport au volume du polymère du type caoutchouc.

5. Une fermeture selon l'une quelconque des revendications précédentes, dans laquelle la matière de charge consiste pratiquement uniquement en graphite.

6. Une fermeture selon l'une quelconque des revendications 1 à 4, dans laquelle la matière de charge comprend de 0,05 à 2 parties en volume de graphite par partie en volume des autres matières de charge minérales en particules.

7. Une fermeture selon l'une quelconque des revendications précédentes, dans laquelle la quantité totale de matières de charge est de 20 à 175% en volume par rapport au volume du polymère du type caoutchouc.

8. Une fermeture selon l'une quelconque des revendications précédentes, dans laquelle le polymère du type caoutchouc est choisi parmi les copolymères styrène-butadiène, le polychloroprène, le chlorure de polyvinylidène, les polymères styrène-acrylates, l'acétate de polyvinyle et les copolymères éthylène-propylène.

9. Une fermeture selon l'une quelconque des revendications précédentes, dans laquelle le polymère du type caoutchouc a été préparé par polymérisation en émulsion.

10. Une fermeture selon l'une quelconque des revendications précédentes, dans laquelle le polymère du type caoutchouc est un copolymère styrène-butadiène.

11. Une fermeture selon l'une quelconque des revendications précédentes, dans laquelle la composition comprend en outre une résine adhésive.

12. Une fermeture selon la revendication 11, dans laquelle la quantité de résine adhésive est de 10 à 250% en volume par rapport au volume du polymère du type caoutchouc.

13. Une fermeture selon la revendication 1, dans laquelle la composition comprend 100 parties en volume de caoutchouc de styrènebutadiène polymérisé en émulsion, 10 à 50 parties en volume de graphite et 10 à 120 parties en volume d'une autre matière de charge minérale en particules.

14. Une fermeture selon l'une quelconque des revendications précédentes, dans laquelle le joint a été formé à partir d'une composition liquide comprenant un milieu liquide dans lequel le polymère du type caoutchouc est dissous ou dispersé.

15. Une fermeture selon la revendication 14, dans laquelle la composition comprend un latex du polymère du type caoutchouc et la matière de charge a été dispersée dans le latex.

16. Une fermeture selon la revendication 14, dans laquelle la composition comprend un milieu aqueux dans lequel le polymère du type caoutchouc solide et la matière de charge ont été dispersés.

17. Une fermeture selon la revendication 14, dans laquelle la composition comprend un liquide organique dans lequel une partie au moins du polymère du type caoutchouc a été dissoute.

18. Un procédé pour provoquer l'étanchéité d'une fermeture de récipient à l'égard d'un récipient, qui comprend l'application en doublage sur la face d'étanchéité de la fermeture d'une composition contenant un polymère du type caoutchouc dans laquelle une matière de charge est dispersée uniformément, la solidification de la composition avec formation d'un joint puis la compression de la face d'étanchéité de la fermeture autour de l'extrémité du récipient, provoquant ainsi la fixation de la fermeture sur le récipient avec le joint à l'intérieur, caractérisé en en ce que la matière de charge comprend du graphite.

19. Un procédé selon la revendication 18, dans lequel le récipient est une boîte métallique et la fermeture est un fond de dessus ou de dessous de boîte métallique.

20. Un récipient ayant sa fermeture fixée et étanche, la fermeture comprenant un joint formé d'une composition contenant un polymère du type caoutchouc et dans laquelle une matière de charge est dispersée uniformément, caractérisé en ce que la matière de charge comprend du graphite.